# EUROPEAN PATENT APPLICATION

(11) **EP 4 814 854 A1**
(43) Date of publication of application: **30.09.2026**
(21) Application number: 25166748.1
(22) Date of filing: 27.03.2025
(51) Int. Cl.: G06Q 50/06, G06Q 10/20, F24D 10/00, G05B 23/00, G06N 3/08, G06N 20/00

(54) **A METHOD AND SYSTEM FOR DIAGNOSING OPERATIONAL IRREGULARITIES IN A THERMAL ENERGY EXCHANGE SYSTEM**

(71) Applicant: VITO NV, 2400 Mol (BE); Cheddad, Abbas, 371 79 Karlskrona (SE); Alawadi, Sadi, 371 79 Karlskrona (SE); Ghazi, Ahmad Nauman, 371 79 Karlskrona (SE)
(72) Inventor: VAN DREVEN, Jonne, B-2400 Mol (BE); AL KOUSSA, Jad, B-2400 Mol (BE); VANHOUDT, Dirk, B-2400 Mol (BE); CHEDDAD, Abbas, 371 79 Karlskrona (SE); ALAWADI, Sadi, 371 79 Karlskrona (SE); GHAZI, Ahmad Nauman, 371 79 Karlskrona (SE)
(74) Representative: V.O.

(57) **Abstract**

The disclosure relates to a system and computer-implemented method for diagnosing faults in a thermal energy exchange system. It includes a first side generating heating/cooling, a second side consuming it, and at least one district heating substation facilitating energy transfer. The method processes time-series sensor data, generating augmented data by identifying fault-related segments, selecting references, aligning additional segments, and creating synthetic fault representations. A machine learning model is pre-trained on this data, then fine-tuned with real operational data. The refined model is applied to new data for fault diagnosis in the substation and downstream systems. Further, the invention relates to a computer-implemented method of training a fault classification model for diagnosing operational irregularities.

## Description

### FIELD OF THE INVENTION

The present invention pertains to the field of thermal energy exchange systems, particularly those involving district heating and cooling technologies. The invention relates to computer-implemented methods and systems for diagnosing operational irregularities within such systems, where thermal energy is transferred between a first side, which provides heating and/or cooling, and a second side, which consumes heating and/or cooling. The invention also encompasses the use of district heating substations and downstream heating/cooling systems, leveraging sensor data acquisition and machine learning techniques to identify and classify faults. Furthermore, the invention relates to data processing, such as data augmentation, time-series analysis, and machine learning model training, particularly focusing on fault detection and diagnosis for improving the predictive accuracy concerning operational discrepancies in thermal energy exchange systems. The invention also relates to computer-implemented method of training a fault classification model for diagnosing operational irregularities in a thermal energy exchange system.

### BACKGROUND TO THE INVENTION

District Heating (DH) systems are important infrastructures that provide efficient and sustainable thermal energy to densely populated urban areas, where for example individual heating solutions may be impractical. These systems rely on DH substations to transfer heat effectively to end-users. However, a significant proportion of DH substations operate below optimal efficiency due to various faults and inefficiencies. Some studies have indicated that between 43% to 75% of analyzed substations suffer from operational inefficiencies caused by faults such as valve malfunctions, sensor inaccuracies, and suboptimal system design or operation. For example, operators in major cities estimate that over 50% of their substations are affected by such issues.

These faults can lead to elevated return temperatures and decreased system efficiency, resulting in increased operational costs and environmental impacts. A single large faulty substation can incur significant annual costs due to excessive network pump power consumption. Such inefficiencies pose significant challenges for integrating DH systems into modern smart energy networks and achieving sustainability goals.

Traditional methods for Fault Detection and Diagnosis (FDD) in DH systems primarily rely on manual inspections or threshold-based techniques. Manual inspections are labor-intensive, time-consuming, and prone to human error, often resulting in delayed fault detection and prolonged periods of suboptimal operation. Threshold-based methods, while simpler to implement, oversimplify the inherently complex and dynamic behavior of DH systems. They typically require fixed thresholds that may not adapt well to varying operational conditions, leading to faults remaining undetected for extended periods or only being identified during infrequent maintenance checks.

With the increasing complexity of DH systems, especially as they transition to next generation district heating systems, e.g. Fourth Generation District Heating (4GDH) systems, operating at lower supply temperatures, the limitations of traditional FDD methods become more pronounced. The smaller margin for errors in 4GDH systems amplifies the consequences of undetected faults, further emphasizing the need for more and reliable diagnostic methods.

The advent of automatic heat meters in DH substations has led to the collection of more operational data, creating opportunities for data-driven FDD solutions. Machine Learning (ML) and Predictive Maintenance (PM) strategies have shown potential in other industries to enable early fault detection, prioritize maintenance efforts, and reduce energy consumption. However, implementing ML-based FDD in DH systems faces significant challenges.

One of the primary challenges is the scarcity of labeled fault data. Collecting, labeling, and processing real-world DH data is resource-intensive and often constrained by privacy regulations and operational complexities. This data scarcity limits the effectiveness of supervised ML approaches, particularly those involving Deep Learning (DL), which typically require large amounts of labeled data to perform effectively.

Additionally, DH systems exhibit complex temporal patterns and dynamic behaviors influenced by various factors such as weather conditions, consumer usage patterns, and system configurations. Traditional ML models may struggle to capture these intricacies without substantial amounts of high-quality data. Moreover, existing data augmentation techniques commonly used to expand datasets in other domains may not be directly applicable or effective for the time-series data characteristic of DH systems. These traditional augmentation methods may introduce unrealistic variations that do not accurately reflect the operational patterns of DH substations, degrading model performance.

Furthermore, the issue of data imbalance is prevalent in FDD for DH systems, where fault events are relatively rare compared to normal operational data. This imbalance can bias ML models toward normal conditions, reducing their sensitivity to detect and diagnose faults accurately.

Therefore, the current state of the art in fault detection and diagnosis for DH substations is hindered by reliance on manual and threshold-based methods, which are insufficient for addressing the complexity and dynamic nature of modern DH systems. The scarcity of labeled fault data, challenges in modeling complex temporal behaviors, limitations of existing data augmentation techniques, and data imbalance issues further exacerbate the difficulties in implementing effective data-driven FDD solutions. These challenges highlight the need for novel approaches that can overcome data scarcity, accurately model complex time-series data, and/or improve fault diagnosis accuracy to enhance the operational efficiency of DH substations.

### SUMMARY OF THE INVENTION

It is an object of the invention to provide for a method and a system that obviates at least one of the above mentioned drawbacks.

Additionally or alternatively, it is an object of the invention to provide for an enhanced method and system for diagnosing operational irregularities in a thermal energy exchange system.

Additionally or alternatively, it is an object of the invention to provide for an enhanced method and system training a fault classification model for diagnosing operational irregularities in a thermal energy exchange system.

Additionally or alternatively, it is an object of the invention to overcome the challenges associated with data scarcity in fault diagnosis of district heating systems.

Additionally or alternatively, it is an object of the invention to provide a robust fault diagnosis framework for district heating substations operating under complex conditions.

Additionally or alternatively, it is an object of the invention to improve operational efficiency of district heating substations by enhancing the accuracy and reliability of fault diagnosis.

Thereto, the invention provides for a computer-implemented method for diagnosing operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one district heating substation connected to the first side and the second side, the substation being configured to facilitate thermal energy exchange between the first side and the second side, wherein one or more downstream heating/cooling systems at the second side are coupled to the at least one substation, the method comprising: receiving time-series data acquired from one or more sensors measuring operational parameters of the district heating substation; generating augmented data from the received time-series data by performing the steps of: identifying, for each fault type, a plurality of time-series segments associated with that fault type; selecting at least one reference segment from the plurality of time-series segments; aligning one or more additional segments within a chosen temporal window around the reference segment using a time-series alignment technique; and combining the aligned segments to create a synthetic segment representative of said fault type; pre-training a fault classification model on the augmented data, wherein the fault classification model is a machine learning model configured to process time-series data; fine-tuning the fault classification model using non-augmented time-series data of the district heating substation, so as to adapt the model to actual operational distributions; and applying the fine-tuned fault classification model to newly acquired time-series data to diagnose faults in the district heating substation and/or the one or more downstream heating/cooling systems coupled to the district heating substation.

The method addresses the challenges associated with accurately identifying faults in such systems, which are often complicated by increasing operational complexities and a scarcity of labeled fault data.

Time-series data can be received from one or more sensors measuring operational parameters of the district heating substation. These sensors may monitor variables such as temperatures, flow rates, and pressures, providing continuous data that reflects the substation's operating conditions over time. The time-series data captures the dynamic behavior of the system, which is influenced by for example cyclic operational patterns, external environmental factors, and user demand.

To enhance the available data for training a fault classification model, the method generates augmented data from the received time-series data. For each identified fault type, a plurality of time-series segments associated with that fault type is identified. These segments may correspond to repeated operational cycles, such as daily cycles, where similar patterns indicative of the fault are observed. Selecting these segments allows the method to focus on periods where the fault behavior is pronounced.

At least one reference segment is selected from the plurality of time-series segments for each fault type. Additional segments within a chosen temporal window around the reference segment are then aligned using a time-series alignment technique. This alignment compensates for temporal variances in the occurrence of fault patterns, ensuring that similar features are properly synchronized even if they occur at slightly different times within the operational cycle. In some examples, the alignment process may include applying constraints to control the allowable warping path, preserving the integrity of the time-series data and preventing unrealistic distortions.

The aligned segments are combined to create a synthetic segment representative of the fault type. This combination may involve computing an average or weighted average of the aligned segments, resulting in a synthetic fault signature that encapsulates the characteristic patterns associated with the fault. By generating multiple synthetic segments through different combinations of reference and aligned segments, the method effectively expands the dataset, introducing greater diversity and enabling the fault classification model to learn a more comprehensive representation of each fault type.

A fault classification model, configured as a machine learning model capable of processing time-series data, is pre-trained on the augmented data. The model may employ architectures such as convolutional neural networks (CNNs), recurrent neural networks (RNNs), including variants like long short-term memory networks (LSTM), or combinations thereof, which are well-suited for extracting temporal features and capturing sequential dependencies in time-series data. Pre-training on the augmented data allows the model to learn underlying patterns and behaviors associated with various fault types, improving its ability to generalize from limited data.

To adapt the model to the actual operational distributions of the district heating substation, the method fine-tunes the fault classification model using non-augmented time-series data. Fine-tuning involves updating the model's parameters based on real-world data, enhancing its accuracy and robustness when applied to new, unseen data. This step ensures that the model accounts for the specific characteristics and variations present in the actual operational environment, including any noise or anomalies not represented in the synthetic data.

The fine-tuned fault classification model is then applied to newly acquired time-series data to diagnose faults in the district heating substation and the downstream heating or cooling systems coupled to it. By analyzing the new data, the model can identify patterns indicative of specific faults, enabling timely and accurate diagnosis. This facilitates proactive maintenance and intervention, reducing downtime and improving the overall efficiency of the thermal energy exchange system.

The method provides the ability to overcome the limitations posed by scarce labeled fault data through effective data augmentation and machine learning techniques. By generating synthetic segments that capture the variability and nuances of fault signatures, the method enriches the training dataset, allowing the model to learn more robust and generalizable representations of faults. The combined approach of pre-training on augmented data and fine-tuning on actual operational data enhances the model's performance, leading to more reliable and efficient fault diagnosis in district heating substations and associated downstream systems.

Optionally, each time-series segment corresponds to a repeated operational cycle.

The operational cycle may be on a daily basis. However, other timeframes may also be employed, for example on an hourly basis, or a timeframe including a couple of hours, etc.

By structuring the time-series data into segments that reflect e.g. daily operational cycles, the method leverages the consistent and cyclical nature of thermal energy exchange systems. These systems often exhibit regular patterns over the course of a day due to predictable human activities and environmental factors influencing heating or cooling demands. By capturing these daily cycles, the fault classification model can more effectively distinguish between normal operational patterns and anomalies indicative of faults. This approach enhances the model's ability to recognize and learn from recurring fault-specific patterns inherent in the system's operation. By focusing on patterns that recur e.g. daily, the model builds a robust understanding of characteristic fault manifestations, which improves its capacity to detect deviations caused by faults. Additionally, organizing the data into daily time-series segments assists in data augmentation processes by providing a consistent basis for combining and comparing data. Since operational patterns are similar from day to day, combining data from different days produces meaningful synthetic data that accurately reflects the system's behavior under various conditions. This increases the diversity and quantity of data available for training the model, leading to improved fault diagnosis accuracy. Overall, utilizing time-series segments corresponding to repeated operational cycles on a daily basis allows the method to capture the inherent cyclical behavior of the thermal energy exchange system, thereby enhancing the model's ability to learn fault-specific patterns and detect anomalies, resulting in an improvement in diagnosing faults.

Optionally, the time-series alignment technique is a dynamic time warping, DTW, technique.

DTW is an algorithm that calculates an optimal match between two given sequences by stretching or compressing the time dimension, allowing for the alignment of sequences that may vary in speed or timing. By applying DTW, temporal distortions between the reference segment and the additional segments are effectively handled, ensuring that key features and patterns indicative of the fault type are properly aligned.

In some examples, the alignment process involves computing the minimal cumulative distance between the reference segment and each additional segment by allowing non-linear warping along the time axis. This warping is constrained within reasonable limits to prevent excessive stretching or compression, which can distort the underlying fault characteristics. The aligned segments maintain the important temporal dynamics of the operational data while accounting for variations in operational conditions.

After alignment, the aligned segments can be combined to create a synthetic segment representative of the fault type. This combination may involve averaging the aligned time-series data points, resulting in a synthetic fault signature that captures the characteristic patterns of the fault while smoothing out anomalies caused by timing discrepancies. By leveraging DTW in the alignment of additional segments to the reference segment, the method generates high-quality augmented data that faithfully represents the temporal behaviour of specific fault types.

The use of DTW enhances the robustness of the fault classification model by providing it with augmented data that accurately reflects the variability and temporal dynamics of real-world operational faults. This improved data reliability contributes to more effective pre-training of the machine learning model, enabling it to generalize better when diagnosing faults in newly acquired time-series data. Consequently, the application of DTW in the time-series alignment step significantly improves the overall performance and accuracy of fault diagnosis in district heating substations and similar thermal energy exchange systems.

In some examples, the method further comprises standardizing the time-series segments prior to applying the dynamic time warping (DTW) technique. By standardizing, e.g., adjusting each segment to have zero mean and unit variance, the inherent differences in amplitude and baseline offsets among the segments are minimized. Such normalization can ensure that DTW can more effectively focus on the underlying temporal patterns rather than being influenced by disparate magnitudes, thus facilitating a more accurate and robust alignment of the fault-related segments. Consequently, the synthetic segments generated from the standardized and aligned data better represent the characteristic fault signatures, thus enhancing the performance of the fault classification model.

Optionally, the method further includes aligning the one or more additional segments within the chosen temporal window comprises applying a band-limiting technique in DTW to control an allowable warping path.

This application of band-limiting within DTW serves to constrain the alignment process between segments, ensuring that the temporal warping does not exceed realistic boundaries. By doing so, the method prevents excessive stretching or compression of the time-series data during alignment, which can otherwise lead to unnatural distortions in the temporal dynamics of the operational parameters.

The band-limiting technique imposes restrictions on the DTW algorithm by setting a maximum allowable displacement between corresponding points in the time-series segments. In some examples, this constraint creates a Sakoe-Chiba band or a similar warping window that limits the extent to which one segment can be warped to align with another. By controlling the allowable warping path, the method maintains the integrity of important temporal features inherent in the operational data of the district heating substation. This is particularly important when dealing with cyclical patterns, such as daily operational cycles, where preserving the inherent rhythms and fluctuations can be important for generating realistic synthetic data.

This careful alignment avoids introducing inaccuracies or anomalies that may result from unrealistic temporal adjustments. The synthetic segments produced through this controlled alignment process retain the key characteristics of the fault types they represent, while also incorporating variability present in the data. This enhances the diversity and quality of the augmented dataset used for pre-training the fault classification model.

Optionally, the fault classification model comprises: a convolutional neural network (CNN) layer stack configured to extract local temporal features from the time-series data; a recurrent layer configured to capture sequential dependencies; and an attention mechanism configured to weight influential time steps.

The CNN layer stack may include multiple convolutional layers configured to capture high-level patterns and local dependencies within the time-series data acquired from the district heating substation. Each convolutional layer applies a set of filters to the input data, extracting features that represent local temporal variations associated with operational parameters. In some examples, these convolutional layers are followed by activation functions, such as for example Leaky Rectified Linear Units (Leaky ReLU), and may include batch normalization and dropout layers to enhance training stability and prevent overfitting.

In some examples, the outputs from the CNN layers are then processed by max pooling layers, which reduce the dimensionality of the data by retaining the most significant features, thereby focusing the model on the most informative local temporal patterns. This pooling operation aids in distilling important characteristics from the data while reducing computational complexity.

In some examples, following the CNN layer stack, the recurrent layer is implemented, typically as one or more bidirectional Long Short-Term Memory (LSTM) layers. These LSTM layers can be configured to capture sequential dependencies in the time-series data by considering both past and future contexts. The bidirectional nature of the LSTM allows the model to analyze the temporal sequence in both forward and backward directions, enhancing its ability to learn patterns that are dependent on the order of events. The LSTM layers can utilize mechanisms such as dropout and recurrent dropout for regularization, which help in generalizing the model by preventing overfitting to the training data.

In some examples, an attention mechanism is applied after the recurrent layer to dynamically weight influential time steps within the sequence. This mechanism can compute attention weights that highlight the most relevant time steps for the fault classification task. By focusing on important temporal patterns that are indicative of specific fault types, the attention mechanism can enable the model to prioritize information that is most significant for diagnosing operational irregularities. The attention weights are learned during training and allow the model to adaptively concentrate on important features within varying time-series lengths.

In some examples, the outputs from the attention mechanism are aggregated using global average pooling, which reduces the temporal dimension by computing the average of the attention-weighted features across all time steps. This process preserves the most informative features while simplifying the data representation, making it suitable for subsequent classification layers. The aggregated features are then passed through a fully connected layer with an activation function, such as for example Leaky ReLU, and may include additional dropout layers for further regularization.

In some examples, subsequently, the processed features culminate in an output layer, for instance utilizing a softmax activation function for multi-class fault classification. This output layer produces probabilities corresponding to different fault types, enabling the identification and diagnosis of specific operational irregularities within the district heating substation or the downstream heating/cooling systems.

The above exemplary architecture allows effective modeling both spatial and temporal aspects of the time-series data, allowing the fault classification model to learn complex patterns and dependencies inherent in the operational parameters of the thermal energy exchange system. By leveraging deep learning techniques, including convolutional layers for feature extraction, recurrent layers for sequential modeling, and an attention mechanism for adaptive focus on important time steps, the method achieves improved fault classification performance. This enables timely and accurate diagnosis of operational irregularities, enhancing the efficiency and reliability of the thermal energy exchange system.

Optionally, the combining of the aligned segments further comprises: computing an average or weighted average value among a reference segment and aligned segments, resulting in a synthetic fault signature; and repeating said combining step with different reference segments to increase diversity of the augmented fault dataset.

This averaging procedure synthesizes a new time-series segment, referred to as a synthetic fault signature, that encapsulates the characteristic features of a particular fault type. By integrating the temporal data from both the reference segment and its aligned counterparts, the method effectively captures the important patterns and anomalies associated with the fault, ensuring that the synthetic fault signature reflects a comprehensive representation of the fault's manifestation.

To enhance the diversity and richness of the augmented fault dataset, the method includes repeating the combining step with different reference segments selected from the plurality of time-series segments associated with the same fault type. Each reference segment brings its unique context and variations to the averaging process, resulting in multiple synthetic fault signatures that embody different aspects and scenarios of the fault occurrence. This repetition with various reference segments ensures that the augmented dataset encompasses a wide spectrum of potential fault patterns, accounting for operational variabilities and sensor noise that may affect the fault's presentation in real-world conditions.

A robust and diverse synthetic dataset can be effectively generated that significantly enhances the training of the fault classification model. By exposing the machine learning model to a broader range of fault representations through these synthetic fault signatures, the model's generalization capabilities are improved. It becomes better equipped to recognize and diagnose faults under different operational conditions, leading to increased accuracy and reliability of the diagnostic system. This is particularly advantageous in thermal energy exchange systems where obtaining extensive labeled fault data can be challenging due to the infrequency of certain faults and the operational constraints of district heating substations.

By focusing on the combination of aligned segments through the computation of averages or weighted averages and by repeatedly applying this process with multiple reference segments, the method effectively addresses the issue of data scarcity. It leverages existing time-series data to create a comprehensive augmented dataset without the need for additional data collection or fault simulation. This strategy not only enhances the performance of the diagnostic model but also contributes to more efficient maintenance planning and fault management in the thermal energy exchange system, ultimately promoting operational efficiency and reliability.

Optionally, pre-training on the augmented data is conducted on only a selected subset of time-series segments of the district heating substation data such that at least a portion of the non-augmented time-series data is withheld for subsequent fine-tuning to reduce overlap.

In some examples, a portion of the non-augmented time-series data is deliberately withheld and reserved for subsequent fine-tuning of the fault classification model. This deliberate separation between the pre-training and fine-tuning datasets serves to reduce overlap between the augmented and original data, thereby mitigating the risk of overfitting the model to synthetic patterns that may not fully represent real-world operational conditions.

By focusing on a subset of the data for augmentation, the model learns generalized representations of fault types without becoming overly specialized to specific instances within the entire dataset. The withholding of a portion of the non-augmented time-series data allows for a subsequent fine-tuning phase, where the model is adapted to the actual operational distributions of the district heating substation. This fine-tuning process refines the model's parameters based on real, unaltered data, enhancing its ability to accurately diagnose faults under real-world conditions. The separation ensures that the model benefits from the diversity introduced by the augmented data while retaining the capacity to generalize effectively to new, unseen data.

Optionally, the time-series data includes at least primary supply temperature, primary return temperature, and timestamps, wherein the temperature difference between primary supply and return lines is determined generating the augmented data is configured to emphasize cyclical variations in said temperature difference to capture characteristic fault signatures.

By associating these temperature measurements with their respective timestamps, the method constructs a detailed temporal profile of the substation's thermal performance.

In some examples, to analyze the thermal efficiency of the substation, the method determines the temperature difference between the primary supply and return lines, denoted as ΔT. This is calculated by subtracting the primary return temperature from the primary supply temperature at each timestamp, such that ΔT = Ts - Tr. The temperature difference ΔT serves as a key indicator of the heat exchange efficiency and is sensitive to various operational conditions and faults within the system. Variations in ΔT can signify changes in heat demand, flow rates, or potential issues such as valve malfunctions or sensor inaccuracies.

The method generates augmented data by emphasizing the cyclical variations present in the ΔT time-series. These cyclical variations often correspond to regular operational cycles, such as daily fluctuations in heating demand due to environmental or user behavior patterns. By focusing on these cyclical patterns, the method captures characteristic fault signatures embedded within the ΔT data. Faults in the system may manifest as anomalies or deviations from the expected cyclical behavior of ΔT, such as unexpected spikes, drops, or altered patterns in the temperature difference over time.

To accentuate these variations, the method manipulates the ΔT time-series during data augmentation to highlight the cyclical patterns and any deviations caused by faults. This involves creating synthetic segments that preserve or enhance the cyclical characteristics of ΔT associated with specific fault types. By aligning and combining segments of the ΔT data that exhibit these patterns, the augmented data reflects the temporal dynamics important for accurate fault diagnosis.

Optionally, the method further comprises selecting at least one sampling frequency for acquiring sensor data between 0.5 minute and one hour; and aggregating or smoothing the sensor data via one or more sampling strategies, wherein a sampling interval is determined and selected to preserve fault-related transient behaviors while mitigating noise.

The chosen sampling frequency can be important to ensure that the data collected adequately captures the transient behaviors associated with faults while simultaneously mitigating the impact of noise inherent in high-frequency measurements. Determining the optimal sampling interval involves a balance between data resolution and noise reduction. A higher sampling frequency provides more detailed data, enabling the detection of rapid changes and transient events indicative of faults. However, excessively high sampling rates can introduce significant noise, which may obscure meaningful patterns important for accurate fault diagnosis.

To address this, in some examples, the method includes applying aggregation or smoothing strategies to the sensor data. These strategies may involve statistical techniques such as averaging (mean), median filtering, or other smoothing methods within the selected sampling interval. For example, aggregating data points by computing the mean or median over the sampling period can reduce the influence of random fluctuations and measurement noise, enhancing the signal-to-noise ratio. This process preserves the important characteristics of the underlying signal related to fault conditions while filtering out irrelevant disturbances.

The sampling interval is determined to preserve fault-related transient behaviors that are important for accurate detection and classification of faults in the district heating substation and the downstream heating or cooling systems. For instance, a sampling interval of five minutes has been found to provide an effective balance, capturing important fault dynamics without being overwhelmed by noise. This interval is sufficiently short to detect transient events associated with faults but long enough to mitigate high-frequency noise.

The aggregation or smoothing strategies complement the selection of the sampling interval by further reducing noise in the sensor data. Median-based sampling strategies, in particular, have proven effective in preserving important features necessary for distinguishing between different fault types. By computing the median value of sensor readings within each sampling interval, the method reduces the impact of outliers and transient noise spikes that can otherwise lead to misclassification.

Optionally, generating the augmented data for each fault type further comprises: assigning a higher weighting factor to a chosen reference time-series segment than to the additional aligned time-series segments when computing the synthetic segment, wherein multiple variations of synthetic segments are produced to capture day-to-day fluctuations of the same fault type.

By assigning a higher weighting to the reference segment during the combination of these aligned segments, the synthetic segment emphasizes the important attributes of the fault.

Multiple variations of synthetic segments are produced by repeating this process with different reference segments and subsets of aligned segments. Each synthetic segment captures not only the important features of the fault type but also incorporates day-to-day fluctuations inherent in the operational data. This method effectively generates a diverse yet representative augmented dataset that reflects the natural variability of the thermal energy exchange system while maintaining a focus on the specific fault characteristics.

By incorporating natural operational variability through the additional aligned segments, the model becomes better at diagnosing faults under varying conditions. This leads to more accurate and reliable fault diagnosis in the district heating substation and the downstream heating or cooling systems connected to it, as the model is trained on augmented data that closely mirrors real-world scenarios with both consistent fault patterns and daily operational changes.

Optionally, generating the augmented data for each fault type further comprises: randomly selecting a subset of time-series segments within a cyclical window from among the plurality of time-series segments associated with said fault type; and repeating the alignment and combination steps with different reference segments and different subsets of time-series segments, in order to create multiple diverse synthetic segments that expand the fault-specific augmented dataset.

The random selection of subsets introduces variability by incorporating different operational days and conditions, which are reflective of the fault type's manifestations over time.

In some examples, the method repeats the alignment and combination steps with different reference segments and different subsets of time-series segments. For each iteration, a reference segment is chosen randomly, and additional segments within the specified temporal window are selected. These additional segments are aligned to the reference segment using a time-series alignment technique, ensuring that temporal discrepancies due to operational variances are minimized. The alignment facilitates the combination of segments by synchronizing their temporal features, allowing for a coherent synthesis of data.

By combining the aligned segments, such as through averaging, the method creates synthetic segments that are representative of the fault type. Repeating this process with various reference segments and different subsets results in multiple diverse synthetic segments. Each synthetic segment encapsulates different temporal patterns and fluctuations, capturing the day-to-day variability inherent in the fault's manifestation. This extensive generation of synthetic data significantly expands the fault-specific augmented dataset, enhancing its diversity and richness.

Optionally, the augmented data generation further comprises constraining a maximum allowable time-warping displacement in the dynamic time warping alignment.

This constraint ensures that the alignment between the reference segment and additional segments does not involve excessive stretching or compressing of the time axis, which can otherwise introduce unrealistic temporal distortions into the synthetic data.

In some examples, the DTW algorithm is utilized to align time-series segments by minimizing the cumulative distance between them. However, without constraints, DTW can produce warping paths that excessively distort the time dimension, aligning points that are temporally distant in a manner not representative of real operational behaviors. To address this, in some examples, a Sakoe-Chiba band or similar band-limiting constraint is implemented in the DTW algorithm. This constraint restricts the warping path to a predefined window around the main diagonal of the alignment matrix, effectively capping the maximum temporal displacement allowed during alignment.

By limiting the allowable warping displacement, the method maintains the temporal integrity and realism of the augmented data. This approach prevents the synthetic time-series segments from exhibiting temporal anomalies that do not occur under actual operational conditions.

Furthermore, constraining the warping displacement during augmentation contributes to generating a diverse yet realistic set of synthetic segments. This diversity can be important for exposing the model to a wide range of fault manifestations, improving its robustness and diagnostic precision. The method balances the need for variability in the training data with the necessity of maintaining data fidelity, resulting in a fault classification model that is both accurate and reliable.

Optionally, the method further comprises modifying the steps of generating augmented data to incorporate additional perturbations of temporal dynamics, seasonal effects, and/or sensor drift patterns.

By integrating these perturbations into the augmented dataset, the fault classification model is exposed to a wider range of operational scenarios, enhancing its ability to generalize and accurately diagnose faults under varying conditions.

To account for temporal dynamics, the method adjusts the time-series data to simulate variations that occur over different timescales within the system's operation. This involves manipulating the timing and sequencing of events in the data to reflect changes in usage patterns throughout the day or week. For instance, the method may warp the time axis of the time-series segments to compress or expand certain periods, mimicking peak demand hours or periods of reduced activity. This temporal warping enables the model to recognize fault patterns that may manifest differently during various operational cycles, improving its robustness to timing variations.

Incorporating seasonal effects entails modifying the augmented data to reflect changes in environmental conditions and system usage that occur across different seasons. In some examples, the method adjusts operational parameters such as temperatures, flow rates, or energy demands in the time-series data to simulate conditions typical of seasonal variations. For example, supply and return temperatures may be increased or decreased to emulate the higher heating demands of winter or the reduced requirements during summer months. By embedding these seasonal characteristics into the augmented data, the model learns to detect faults that may be influenced by or exhibit differently under varying seasonal conditions.

Sensor drift patterns are simulated by introducing gradual changes or biases to the sensor readings in the time-series data, representing the degradation or calibration drift of sensors over time. This can be achieved by adding slow-varying offsets or scaling factors to the sensor measurements, or by introducing stochastic noise that reflects potential inaccuracies in the sensors. By incorporating sensor drift into the augmented data, the model becomes adept at distinguishing between true fault-induced anomalies and variations caused by sensor degradation, thereby maintaining diagnostic accuracy even when sensor performance deteriorates.

These perturbations are integrated into the augmented data generation process by modifying the steps involved in creating synthetic segments representative of each fault type. Before or after the alignment of time-series segments using techniques such as dynamic time warping, the method applies transformation functions that inject the desired perturbations. Time warping functions adjust the temporal dynamics, scaling and offset functions modify the data to reflect seasonal effects, and noise models simulate sensor drift patterns.

According to an aspect, the invention provides for a system for diagnosing operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface the interface is provided by means of at least one district heating substation connected to the first side and the second side, the substation being configured to facilitate thermal energy exchange between the first side and the second side, wherein one or more downstream heating/cooling systems at the second side are coupled to the at least one substation, the system comprising: one or more processors; and one or more non-transitory computer-readable media storing instructions that, when executed by the one or more processors, cause the system to: receive time-series data acquired from one or more sensors measuring operational parameters of the district heating substation; generate augmented data from the received time-series data by performing the steps of: identifying, for each fault type, a plurality of time-series segments associated with that fault type; selecting at least one reference segment from the plurality of time-series segments; aligning one or more additional segments within a chosen temporal window around the reference segment using a time-series alignment technique; and combining the aligned segments to create a synthetic segment representative of said fault type; pre-train a fault classification model on the augmented data, wherein the fault classification model is a machine learning model configured to process time-series data; fine-tune the fault classification model using non-augmented time-series data of the district heating substation, so as to adapt the model to actual operational distributions; and apply the fine-tuned fault classification model to newly acquired time-series data to diagnose faults in the district heating substation and/or the one or more downstream heating/cooling systems coupled to the district heating substation.

By receiving time-series data from sensors in the district heating substation and generating augmented data through the alignment and combination of time-series segments associated with fault types, the training dataset can be significantly expanded. This augmentation allows the fault classification model, trained initially on enriched synthetic data and fine-tuned on actual operational data, to achieve improved accuracy in fault detection. The model's ability to generalize from limited fault data is improved, leading to more reliable and efficient diagnosis of faults in the substation and downstream systems, by utilizing synthetic data to capture the variability of fault signatures. In this way, the challenge of scarce labeled fault data in thermal energy exchange systems can be effectively overcome.

According to an aspect, the invention provides for a computer-implemented method for diagnosing operational irregularities in a thermal energy exchange system, wherein the thermal energy exchange system comprises a heat source side, a consumer side, and at least one interface device facilitating the transfer of thermal energy between the heat source side and the consumer side, the method comprising: receiving time-series data from one or more sensors measuring operational parameters associated with said interface device; generating augmented data from the received time-series data by identifying fault-related time-series segments, aligning at least one additional segment with a reference segment, and combining these segments to create synthetic representative segments for each fault type; training a machine learning model on the augmented data to recognize fault conditions, wherein the machine learning model is configured to process time-series sensor data; fine-tuning the trained model using non-augmented time-series data reflecting real operational conditions; and applying the fine-tuned machine learning model to newly acquired sensor data to diagnose one or more operational faults in the interface device or connected consumer-side systems.

According to an aspect, the invention provides for a computer-implemented method for detecting anomalies in an energy transfer network comprising one or more energy sources, one or more energy consumers, and at least one intermediate station configured to facilitate the exchange of heating or cooling between the sources and consumers, the method comprising: gathering operational data in the form of time-series measurements from a plurality of sensing devices coupled to the intermediate station; synthesizing representative fault scenarios by identifying and aligning segments of time-series data associated with potential malfunction patterns, so as to create fault-specific augmented data; training and refining a fault detection model using the augmented data and additional real-world data to account for actual operational variations; and deploying the refined fault detection model to continually monitor incoming sensor streams.

According to an aspect, the invention provides for a computer-implemented method for identifying operational faults in a system facilitating the exchange or distribution of thermal energy, the method comprising: collecting time-based sensor data from one or more components within the system; constructing synthetic fault examples by merging multiple time-series segments indicative of known fault types, thus creating augmented training datasets; training a predictive model on said augmented datasets to recognize patterns indicative of system faults; calibrating the predictive model with real-time or historical operational data to reflect actual usage conditions; and deploying the calibrated predictive model to incoming system data for diagnosing and/or classifying faults.

According to an aspect, the invention provides for a computer-implemented method of training a fault classification model for diagnosing operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface the interface is provided by means of at least one district heating substation connected to the first side and the second side, the substation being configured to facilitate thermal energy exchange between the first side and the second side, wherein one or more downstream heating/cooling systems at the second side are coupled to the at least one substation, the method comprising: receiving time-series data acquired from one or more sensors measuring operational parameters of the district heating substation; generating augmented data from the received time-series data, the generating comprising: identifying, for each fault type, a plurality of time-series segments associated with that fault type, selecting at least one reference segment from the plurality of time-series segments, aligning one or more additional segments within a chosen temporal window around the reference segment using a time-series alignment technique, and combining the aligned segments to create a synthetic segment representative of said fault type; pre-training the fault classification model on the augmented data, wherein the fault classification model is a machine learning model configured to process time-series data; and fine-tuning the fault classification model using non-augmented time-series data from the district heating substation to adapt the model to actual operational distributions, in order to train the model to diagnose faults in the district heating substation and/or the one or more downstream heating/cooling systems coupled to the district heating substation.

To enhance the training dataset for the fault classification model, augmented data is generated from the received time-series data. The generation of augmented data involves several steps. For each fault type to be diagnosed, a plurality of time-series segments associated with that fault type is identified. Each time-series segment corresponds to a period during which the particular fault was active, capturing the operational parameters under that fault condition. These segments may represent repeated operational cycles, such as daily patterns, where the fault manifests consistently.

At least one reference segment is selected from the plurality of time-series segments for each fault type. The reference segment serves as a baseline for further processing and represents a characteristic instance of the fault. Within a chosen temporal window around the reference segment, one or more additional segments are aligned to the reference segment using a time-series alignment technique. After alignment, the aligned segments are combined to create a synthetic segment representative of the fault type. The combination may involve computing an average or weighted average of the aligned segments, possibly assigning a higher weighting to the reference segment to emphasize its central role. This synthetic segment captures the characteristic features of the fault type while incorporating variability from different instances, enhancing the diversity of the training data and enabling the model to generalize better.

The fault classification model, which is a machine learning model configured to process time-series data, is then pre-trained on the augmented data. Through this pre-training, the model learns the general patterns and features associated with each fault type, benefiting from the expanded and diversified dataset provided by the synthetic segments. The augmented data allows the model to be exposed to a wider range of fault manifestations, improving its ability to recognize faults in varied conditions.

Following pre-training, the fault classification model is fine-tuned using non-augmented time-series data from the district heating substation. This fine-tuning process adapts the model to the actual operational distributions of the substation, ensuring that the model accurately reflects the specific characteristics and nuances of the real-world data. By fine-tuning on non-augmented data, the model adjusts to any discrepancies between the synthetic data and the actual operational conditions, aligning its predictions more closely with the real-world behaviors of the substation.

As a result of this two-stage training process, the fault classification model is trained to diagnose faults in the district heating substation and the one or more downstream heating or cooling systems coupled to it. The trained model can be applied to newly acquired time-series data to identify operational irregularities, enabling timely detection of faults and facilitating proactive maintenance. By effectively leveraging augmented data and fine-tuning with actual operational data, the method enhances the model's robustness and accuracy, contributing to improved reliability and performance of the thermal energy exchange system.

According to an aspect, the invention provides for a computer-implemented method for detecting operational anomalies in a resource distribution system comprising a supply side, a consumption side, and an interface for transferring a resource therebetween, the method comprising: gathering sensor measurements over time from the interface, wherein said measurements are indicative of operating parameters of the interface and any downstream components; generating a training set that includes one or more synthetic data instances by combining time-based segments of known fault or anomaly scenarios; training an anomaly detection model using the training set to recognize characteristic patterns associated with multiple fault types; and adapting the trained model to real-world variations by refining it with additional operational data.

According to an aspect, the invention provides for a method for developing a classification model to identify irregular operational conditions in a system configured to generate, distribute, and consume a resource, the method comprising: collecting operational data from one or more system components, said data capturing time-varying metrics indicative of normal and abnormal behavior; enhancing the training data by synthesizing representative examples of known irregularities, wherein such synthesis comprises combining or modifying existing segments of operational data to expand coverage of fault scenarios; training a classification model to discriminate between normal and abnormal states using the enhanced training data; and refining the model using additional real-world measurements to account for actual operational distributions.

It will be appreciated that the notion of a repeated operational cycle may extend beyond a single daily cycle, encompassing other periodicities according to the specific characteristics of the thermal energy exchange system. For example, certain substations or downstream systems might exhibit hourly cycles (e.g., where building occupants adjust temperature settings on an hourly schedule), multi-hour cycles (e.g., a morning and evening peak demand every day), or even shorter intervals of 30 minutes or less (e.g., facilities with highly dynamic workflows). In other exemplary embodiments, the method may leverage two-hour or four-hour cycles that correspond to observed operational trends, such as industrial shift changes, peak commercial usage windows, or staggered control schedules for large office buildings. By adjusting the segment length and sampling interval to capture these alternative timeframes, the model can adapt to a wide range of usage patterns and transient events that may not strictly follow a 24-hour cycle. Consequently, this flexibility ensures that fault detection remains robust whether the operational routine is governed by short, frequent fluctuations, or longer intervals that spread cyclic demand across half-day or multi-hour windows, thereby improving accuracy across diverse deployment scenarios.

It will be appreciated that any of the aspects, features and options described in view of the methods apply equally to the systems and the described devices, models and computer-program products. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of an exemplary system;
Fig. 2 shows a schematic diagram of a method;
Fig. 3 shows a schematic diagram of a process;
Fig. 4 shows a schematic diagram of a process;
Fig. 5 shows a schematic diagram of a model architecture;
Fig. 6 shows a schematic diagram of a graph;
Fig. 7 shows a schematic diagram of graphs;
Fig. 8 shows a schematic diagram of graphs; and
Fig. 9 shows a schematic diagram of graphs.

### DETAILED DESCRIPTION

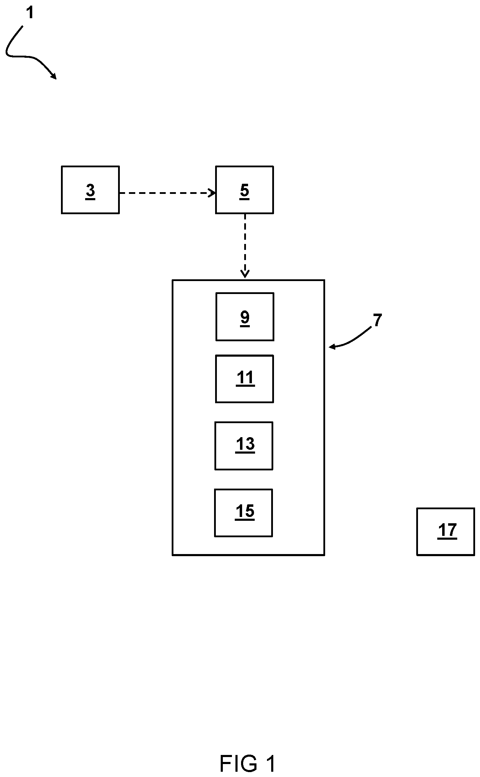

Fig. 1 shows a schematic diagram of an embodiment of an exemplary system 1 for diagnosing operational irregularities in a thermal energy exchange system.

The thermal energy exchange system facilitates the transfer of thermal energy between a first side and a second side via an interface provided by at least one district heating substation. The first side represents the upstream section where heating or cooling is generated, while the second side represents the downstream section where the generated heating or cooling is consumed. The district heating substation serves as the interface between the first side and the second side. It is configured to facilitate thermal energy exchange between these two sides by transferring heat from the primary side to the secondary side, typically using heat exchangers, pumps, valves, and control systems. The substation is connected to one or more downstream heating/cooling systems located on the second side. These downstream systems may include for instance residential, commercial, or industrial heating and cooling systems that consume the thermal energy supplied by the substation.

To monitor the operational parameters of the district heating substation, a series of sensors 3 are installed throughout the system. These sensors 3 may include temperature sensors, flow meters, pressure sensors, and other relevant instrumentation. For example, primary supply temperature sensors measure the temperature of the thermal medium entering the substation from the first side, while primary return temperature sensors measure the temperature of the thermal medium returning to the first side from the substation. Additionally or alternatively, flow meters may for example be used to measure the rate of flow of the thermal medium through the substation.

The system 1 includes a data acquisition module 5 that receives time-series data from the sensors 3. This module 5 collects real-time operational data, which includes parameters such as temperatures, flow rates, and pressures sampled at regular intervals. The time-series data provides a historical record of the substation's operational performance over time.

A processing unit 7 is connected to the data acquisition module 5 and is responsible for processing and analyzing the received time-series data. The processing unit 7 comprises several functional components configured to implement the diagnostic method. A data augmentation module 9 within the processing unit 7 generates augmented data from the received time-series data. This module is configured to perform the following steps:
- Step 1 including identifying time-series segments. For each known fault type, the data augmentation module 9 identifies a plurality of time-series segments associated with that fault type. These segments represent periods during which specific faults have occurred and have been recorded in the system's historical data.
- Step 2 including selecting reference segments. The module selects at least one reference segment from the identified time-series segments for each fault type. The reference segment serves as a baseline or template for further analysis.
- Step 3 including aligning additional segments. Additional time-series segments associated with the same fault type are aligned within a chosen temporal window around the reference segment using a time-series alignment technique, such as dynamic time warping (DTW). This alignment accounts for temporal distortions and variations in the occurrence of faults, ensuring that similar patterns are synchronized despite differences in timing.
- Step 4 including combining aligned segments. The aligned segments are combined to create a synthetic segment representative of the fault type. This may involve averaging the aligned segments or applying weighted combinations to emphasize certain features. The synthetic segment enriches the dataset by providing a generalized representation of the fault, which is beneficial for training machine learning models.

A fault classification model 11 is also part of the processing unit 7. This model 11 can be a machine learning model configured to process time-series data and classify operational states of the substation. The model may for example include layers such as convolutional neural networks (CNNs) for extracting local temporal features, recurrent layers (e.g., Long Short-Term Memory networks) for capturing sequential dependencies, and attention mechanisms for weighting influential time steps in the data.

The processing unit 7 may be configured to first pre-train the fault classification model 11 on the augmented data generated by the data augmentation module 9. Pre-training allows the model to learn generalized patterns associated with different fault types from the synthetic segments. Subsequently, a fine-tuning module 13 is configured to refine the fault classification model 11 using non-augmented time-series data from the district heating substation. Fine-tuning adapts the model to the actual operational distributions and specific characteristics of the monitored system, enhancing its accuracy in real-world conditions.

An application module 15 may be provided that is configured to apply the fine-tuned fault classification model 11 to newly acquired time-series data from the data acquisition module 5. This enables the system 1 to diagnose faults in real time or near real time, identifying operational irregularities in the district heating substation and/or one or more of the downstream heating/cooling systems. When a fault is detected, the system 1 may generate alerts or recommendations for corrective actions, and/or provide information about the type of fault or operational irregularity.

The system 1 may include a user interface 17 that allows operators or maintenance personnel to interact with the system. Through the user interface 17, users can monitor the operational status of one or more substations, view diagnostic results, configure system settings, and/or access historical data. The user interface 17 can be implemented via graphical displays, control panels, and/or software applications accessible on various devices.

Communication within the system 1 may be facilitated by a communication network. This network enables wired and/or wireless data exchange between the sensors 3, data acquisition module 5, processing unit 7, and user interface 17. The communication network can support protocols suitable for various industrial automation and/or control systems.

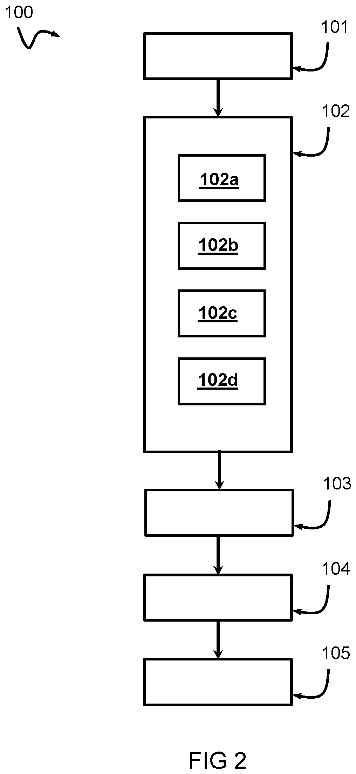

Fig. 2 shows a schematic diagram of a computerized method 100 for diagnosing operational irregularities in a thermal energy exchange system according to the disclosure.

In a first step 101, time-series data acquired from one or more sensors measuring operational parameters of the district heating substation is received.

In a second step 102, augmented data from the received time-series data is generated, by performing the steps of:
- Step 102a: identifying, for each fault type, a plurality of time-series segments associated with that fault type;
- Step 102b: selecting at least one reference segment from the plurality of time-series segments;
- Step 102c: aligning one or more additional segments within a chosen temporal window around the reference segment using a time-series alignment technique; and
- Step 102d: combining the aligned segments to create a synthetic segment representative of said fault type.

In a third step 103, a fault classification model is pre-trained on the augmented data, wherein the fault classification model is a machine learning model configured to process time-series data.

In a fourth step 104, the fault classification model is fine-tuned using non-augmented time-series data of the district heating substation, so as to adapt the model to actual operational distributions.

In a fifth step 105, the fine-tuned fault classification model is applied to newly acquired time-series data to diagnose faults in the district heating substation and/or the one or more downstream heating/cooling systems coupled to the district heating substation.

In some examples, time-series segments are utilized that correspond to repeated operational cycles on a daily basis. This approach enables the fault classification model to distinguish between normal daily operational patterns and anomalies indicative of faults. The model can recognize and learn from daily behavioral patterns, leading to enhanced accuracy in fault diagnosis.

In some examples, the method employs a time-series alignment technique, specifically dynamic time warping (DTW), to align additional segments with the reference segment. The use of DTW allows for flexible alignment of time-series data that may vary in speed or timing, effectively handling temporal distortions between different segments.

In some examples, a band-limiting technique is applied in dynamic time warping during the alignment of segments. The method controls the allowable warping path. This constraint prevents excessive stretching or compression of the time-series data, ensuring that only realistic temporal alignments are used.

In some examples, the fault classification model incorporates a convolutional neural network (CNN) layer stack to extract local temporal features, a recurrent layer to capture sequential dependencies, and an attention mechanism to weight influential time steps. This architecture effectively models both spatial and temporal aspects of the time-series data.

In some examples, the combining of the aligned segments involves computing an average or weighted average among the reference segment and the aligned segments to create a synthetic fault signature. Repeating this process with different reference segments increases the diversity of the augmented fault dataset. This enhances the model's generalization capabilities, allowing it to recognize faults under different operational conditions and improving the robustness of the diagnostic system.

In some examples, pre-training is conducted on the augmented data derived from a selected subset of time-series segments, withholding a portion of the non-augmented data for subsequent fine-tuning. This approach reduces overlap between the augmented and original data, mitigating the risk of overfitting.

In some examples, the time-series data includes primary supply temperature, primary return temperature, and timestamps, with the temperature difference between supply and return lines being determined. By focusing on critical variables and their temporal patterns, the method achieves more accurate and reliable fault diagnosis in the thermal energy exchange system.

In some examples, the method includes selecting a sampling frequency between 0.5 minutes and one hour for acquiring sensor data, and applies aggregation or smoothing strategies to the data.

In some examples, in generating augmented data for each fault type, the method assigns a higher weighting factor to the chosen reference time-series segment compared to the additional aligned segments when computing the synthetic segment. This approach produces multiple variations of synthetic segments that capture day-to-day fluctuations of the same fault type. This enhances the model's robustness in diagnosing faults under varying conditions.

In some examples, the method further enhances data augmentation by randomly selecting subsets of time-series segments within a specified cyclical window (e.g. daily window, window of a couple of hours, etc.), and repeating the alignment and combination steps with different reference segments and subsets. This process creates multiple diverse synthetic segments, expanding the fault-specific augmented dataset.

In some examples, in the data augmentation process, the method constrains the maximum allowable time-warping displacement during dynamic time warping alignment. By limiting the degree of warping, the method ensures that the alignment remains within realistic temporal bounds. This constraint maintains the integrity of temporal relationships in the data, leading to a more accurate and robust fault classification model.

In some examples, the method modifies the steps of generating augmented data to incorporate additional perturbations such as temporal dynamics, seasonal effects, and sensor drift patterns. By simulating these real-world variations, the augmented data more closely reflects actual operational conditions. This leads to improved fault diagnosis performance over time and under varying conditions, increasing the reliability and effectiveness of the thermal energy exchange system.

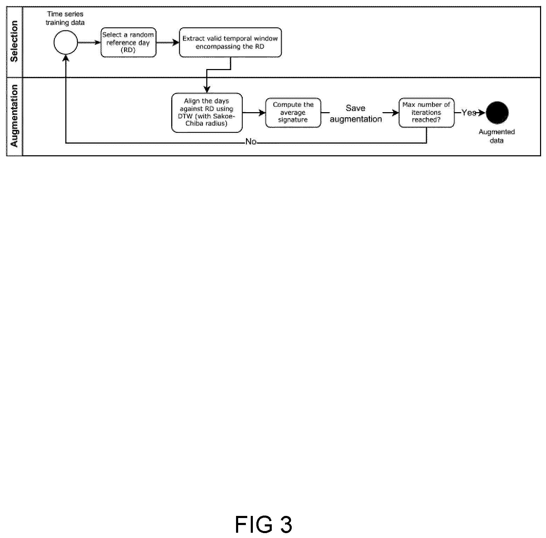

Fig. 3 shows a schematic process flow diagram illustrating an example implementation of a method for generating augmented time-series data in a district heating substation context. Time-series training data are initially acquired from one or more sensors measuring operational parameters (e.g., temperature, flow). A random reference day (RD) is then selected from among the available days associated with a particular fault type. From this reference day, a valid temporal window encompassing that day is extracted to form the basis for augmentation. Next, the system aligns the days contained in this temporal window with the reference day by employing a time-series alignment technique, such as Dynamic Time Warping (DTW) with e.g. a Sakoe-Chiba band. Once the alignment paths are established, an average (or weighted average) signature is computed, effectively combining the original reference day and its neighbor days into a single synthetic fault signature. These steps are repeated for each iteration until the maximum number of desired augmented samples is reached (i.e., the user-specified augmentation count). The resulting augmented data are then stored and can be used, for instance, to pre-train or otherwise enhance machine learning models for fault classification in district heating substations.

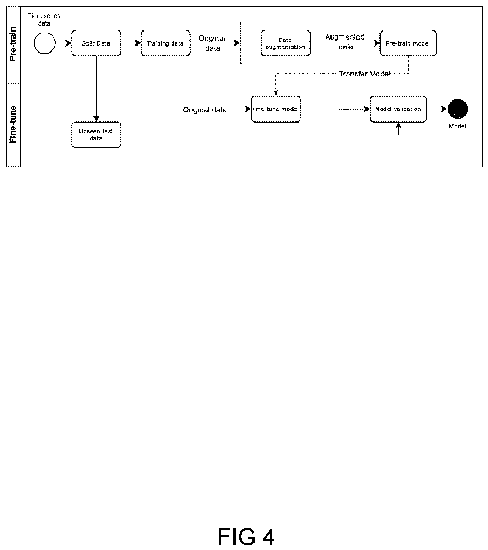

Fig. 4 shows a schematic process flow diagram of an example implementation. Raw time-series data can be split into at least two sets: a training set and any remaining (or "unseen") data. From the training set, a subset of days is passed into the augmentation block, yielding augmented data that capture realistic fault patterns. A model, illustrated here as a neural network architecture, such as a CNN-LSTM, undergoes pre-training solely on this augmented dataset to learn general fault signatures. It will be appreciated that different artificial intelligence model types may be employed.

After pre-training completes, the process transfers the model parameters (i.e., learned weights, biases, or embeddings) to a new training phase (labeled "Fine-tune"). During fine-tuning, the model is exposed to original, non-augmented data from the substation, thus aligning its learned representations with actual operational distributions. A model selection or validation step then determines how well the fine-tuned model classifies real-world fault patterns, optionally using unseen test data. Once validated, the finalized model can be deployed to diagnose faults in other district heating substations or used to inform maintenance and operational decisions.

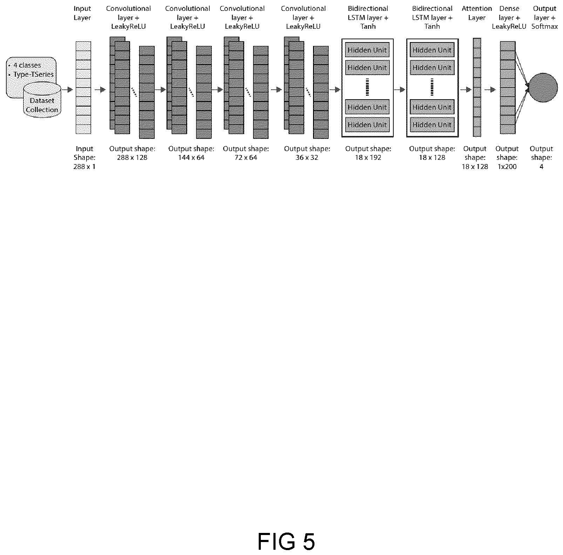

Fig. 5 illustrates an exemplary deep-learning-based fault classification architecture suitable for diagnosing operational irregularities in a thermal energy exchange system. In this embodiment, input time-series data is first passed through a plurality of convolutional layers (e.g., four convolutional layers), each optionally followed by a batch-normalization layer and a non-linear activation (e.g., LeakyReLU). Pooling operations may be interspersed to reduce dimensionality. The output of these convolutional layers is then fed into at least one bidirectional recurrent layer (e.g., LSTM), configured to capture sequential dependencies from both past and future time steps. An attention mechanism is subsequently applied to highlight relevant temporal segments for the classification task. The resulting feature representations are finally passed to one or more dense layers with an activation function (e.g., softmax) to produce the final fault type classification. This overall CNN-LSTM architecture, in conjunction with an attention mechanism, is designed to robustly extract and learn fault-related signatures from limited or augmented time-series data.

### Experimental data

Additional performance assessments were conducted using both controlled lab data and real-world substation data. In one set of experiments, a lab-based test environment generated labeled time-series data under various known fault conditions (e.g., valve leak and sensor deviation). This dataset offered a controlled platform to benchmark classification accuracy under well-defined fault scenarios.

Separately, data were acquired from a large district heating network in which multiple substations were monitored under diverse operating conditions. These real-world measurements presented a broader range of sensor noise and daily usage patterns. Time-series data were sampled at various intervals, ranging from every minute to once per hour, to evaluate how measurement frequency impacts the model's ability to correctly distinguish among distinct faults. Although intermediate frequencies such as five-minute sampling proved particularly advantageous for capturing relevant transients, the approach remained sufficiently robust across different sampling intervals.

In these experiments, the fault classification model was exposed to multiple labeled fault types, including those characterized by subtle temperature deviations as well as more pronounced anomalies in flow or temperature readings. Even with limited amounts of labeled data, synthetic time-series segments generated in accordance with the above-described augmentation principles helped expand the available training samples. This data enrichment improved diagnostic performance when compared to models trained solely on the original (non-augmented) measurements.

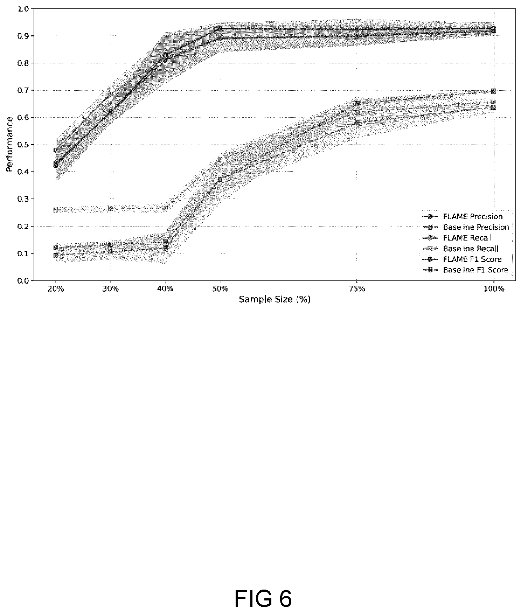

Fig. 6 shows a performance comparison between an embodiment of the disclosed framework and a baseline fault-classification approach, evaluated on an example real-world dataset (labelled "RW01"). The horizontal axis in the line plot denotes different percentages of available training samples, illustrating data-scarcity scenarios, while the vertical axis indicates performance metrics (e.g., precision, recall, and F1 score). Solid lines, dotted lines, and shaded confidence intervals are used to depict average performance and statistical variability. As the percentage of sample size increases, the employed framework consistently demonstrates higher precision, recall, and F1 scores compared to the baseline approach, underscoring the benefits of combining augmented fault signatures with a transfer-learning pipeline.

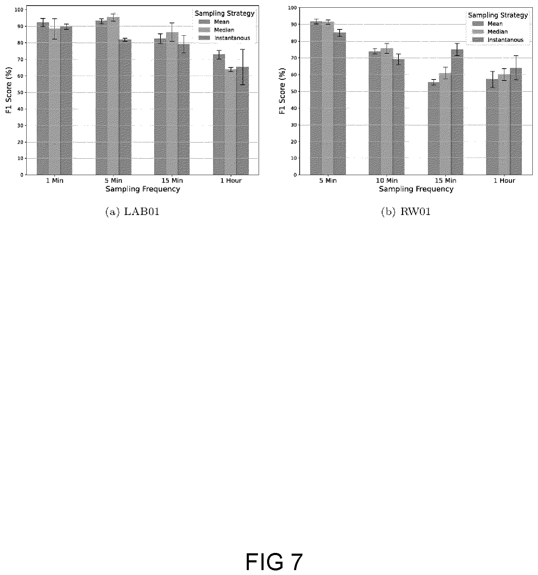

Fig. 7 depicts F1 performance results (vertical axis) with 95% confidence intervals for different sampling frequencies and sampling strategies in two example datasets. In particular, fig. 7 (a), labelled "LAB01", illustrates performance when sensor data is downsampled at intervals of 1 minute, 5 minutes, 15 minutes, and 1 hour. Bars represent different sampling strategies, such as a mean-based strategy, a median-based strategy, or instantaneous sampling. The F1 score is shown to vary according to the chosen sampling rate, with finer resolutions (e.g., 5-minute intervals) typically yielding higher diagnostic accuracy. Fig. 7 (b), labelled "RW01", shows a similar analysis on an example real-world dataset. Again, F1 scores are plotted against different sampling frequencies and strategies. As in fig. 7 (a), the results indicate the tradeoffs in diagnostic performance when data is aggregated over longer intervals or sampled by different methods.

Collectively, fig. 7 demonstrates that selecting appropriate sampling intervals (e.g., around 5 minutes) and a robust aggregation strategy (e.g., median sampling) can improve fault detection accuracy in district heating substations, particularly under conditions where data availability or communication constraints limit how frequently sensor readings can be collected.

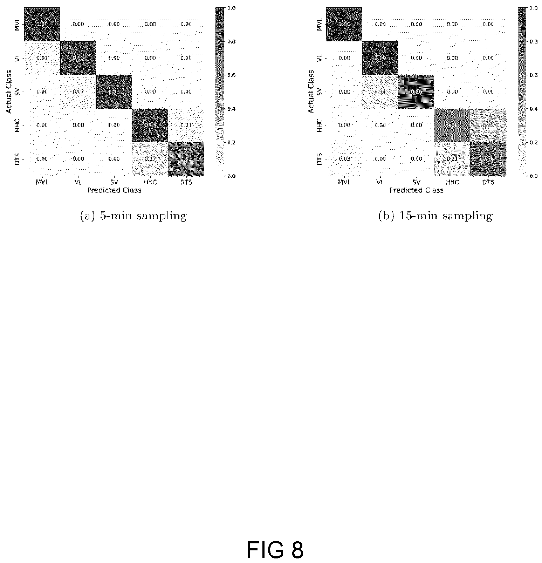

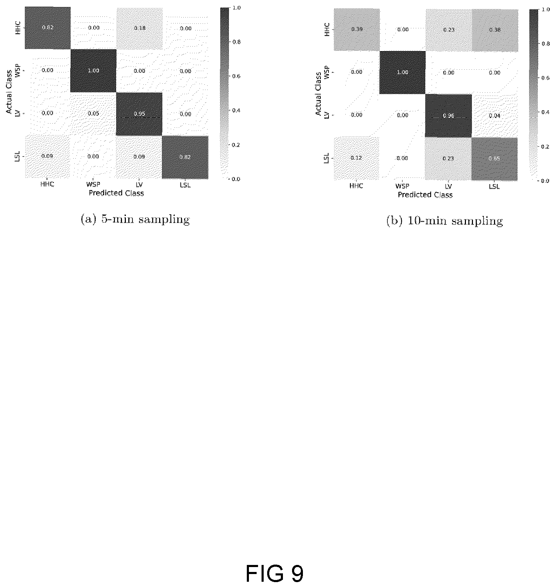

Figs. 8 (a), (b) and figs. 9 (a), (b) collectively illustrate representative confusion matrices generated by an exemplary employed fault-classification framework under different data-sampling intervals. Each confusion matrix uses rows to designate actual fault classes and columns to designate predicted fault classes, with the diagonal elements indicating correct classifications and the off-diagonal elements indicating misclassifications. Darker shading (or higher numeric entries) corresponds to a larger proportion of correct classifications in each cell.

In fig. 8 (a), a confusion matrix is shown obtained by applying the fault classification model to time-series data sampled at five-minute intervals. The vertical axis lists the actual fault categories, including, for example, minor valve leak, valve leak, stuck valve, high heat curve, and temperature sensor deviation, while the horizontal axis indicates the corresponding predicted categories. As shown by the diagonal entries, the model achieves high classification accuracy for each of the listed fault classes when using five-minute data sampling.

Fig. 8 (b) shows a confusion matrix generated in a similar manner to fig. 8 (a), but at a coarser fifteen-minute sampling interval. The same vertical and horizontal axes are used to denote actual and predicted classes, respectively. The matrix highlights the model's varying degrees of classification accuracy at this reduced sampling resolution, where certain off-diagonal entries show higher misclassification rates relative to the five-minute sampling case.

Fig. 9 (a) depicts a confusion matrix for a second set of fault classes evaluated using five-minute sampling. The rows (actual classes) and columns (predicted classes) again indicate different fault types, such as high heat curve, wrong sensor placement, low valve setting, or large secondary leakage. The model maintains strong classification performance at this finer sampling resolution, as indicated by the predominantly high-value diagonal elements.

Fig. 9 (b) illustrates a confusion matrix from the same fault-classification experiment as fig. 9 (a), but the data are sampled at ten-minute intervals. The overall diagonal entries remain relatively strong, yet slightly reduced accuracy in certain fault classes can be observed as the sampling interval increases. This figure further demonstrates how adjusting the sampling interval may alter the reliability of the learned fault signatures and, consequently, the classification performance.

These figures collectively demonstrate that while the disclosed system may correctly identify faults over a range of data-sampling intervals, higher time resolution (such as five minutes) can lead to more accurate classification of subtle or overlapping fault behaviors.

A consistent outcome in the experiments was that higher sampling rates generally facilitated earlier detection of valve or sensor malfunctions, whereas longer intervals sometimes blurred fault signatures, especially for subtle, time-varying anomalies. Nevertheless, even at coarser intervals, the described alignment-based augmentation techniques preserved sufficient cyclic features to allow for accurate identification of faults once the model was fine-tuned using actual operational data.

Overall, these further experiments demonstrated that daily time-series segmentation, controlled sensor alignment, and systematic data augmentation together produced notably high classification metrics. In exemplary real-world tests and experiments, the model sustained high recall and precision across multiple fault categories, underscoring its ability to adapt to variations in substation operating regimes. By combining original and synthetically expanded data, the approach effectively addressed data scarcity issues while preserving the underlying temporal dynamics important for reliable fault diagnosis.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A computer-implemented method for diagnosing operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one district heating substation connected to the first side and the second side, the substation being configured to facilitate thermal energy exchange between the first side and the second side, wherein one or more downstream heating/cooling systems at the second side are coupled to the at least one substation, the method comprising:
receiving time-series data acquired from one or more sensors measuring operational parameters of the district heating substation;
generating augmented data from the received time-series data by performing the steps of:
identifying, for each fault type, a plurality of time-series segments associated with that fault type;
selecting at least one reference segment from the plurality of time-series segments;
aligning one or more additional segments within a chosen temporal window around the reference segment using a time-series alignment technique; and
combining the aligned segments to create a synthetic segment representative of said fault type;
pre-training a fault classification model on the augmented data, wherein the fault classification model is a machine learning model configured to process time-series data;
fine-tuning the fault classification model using non-augmented time-series data of the district heating substation, so as to adapt the model to actual operational distributions; and
applying the fine-tuned fault classification model to newly acquired time-series data to diagnose faults in the district heating substation and/or the one or more downstream heating/cooling systems coupled to the district heating substation.

2. The computer-implemented method of claim 1, wherein each time-series segment corresponds to a repeated operational cycle.

3. The computer-implemented method of claim 1 or 2, wherein the time-series alignment technique is a dynamic time warping, DTW, technique.

4. The computer-implemented method of any one of the preceding claims, wherein aligning the one or more additional segments within the chosen temporal window comprises applying a band-limiting technique in DTW to control an allowable warping path.

5. The computer-implemented method of any one of the preceding claims, wherein the fault classification model comprises:
a convolutional neural network (CNN) layer stack configured to extract local temporal features from the time-series data;
a recurrent layer configured to capture sequential dependencies; and
an attention mechanism configured to weight influential time steps.

6. The computer-implemented method of any one of the preceding claims, wherein the combining of the aligned segments further comprises:
computing an average or weighted average value among a reference segment and aligned segments, resulting in a synthetic fault signature; and
repeating said combining step with different reference segments to increase diversity of the augmented fault dataset.

7. The computer-implemented method of any one of the preceding claims, wherein pre-training on the augmented data is conducted on only a selected subset of time-series segments of the district heating substation data such that at least a portion of the non-augmented time-series data is withheld for subsequent fine-tuning to reduce overlap.

8. The computer-implemented method of any one of the preceding claims, wherein the time-series data includes at least primary supply temperature, primary return temperature, and timestamps, wherein the temperature difference between primary supply and return lines is determined, and wherein generating the augmented data is configured to emphasize cyclical variations in said temperature difference to capture characteristic fault signatures.

9. The computer-implemented method of any one of the preceding claims, further comprising:
selecting at least one sampling frequency for acquiring sensor data between 0.5 minute and one hour; and
aggregating or smoothing the sensor data via one or more sampling strategies,
wherein a sampling interval is determined and selected to preserve fault-related transient behaviors while mitigating noise.

10. The computer-implemented method of any one of the preceding claims, wherein generating the augmented data for each fault type further comprises:
assigning a higher weighting factor to a chosen reference time-series segment than to the additional aligned time-series segments when computing the synthetic segment,
wherein multiple variations of synthetic segments are produced to capture day-to-day fluctuations of the same fault type.

11. The computer-implemented method of any one of the preceding claims, wherein generating the augmented data for each fault type further comprises:
randomly selecting a subset of time-series segments within a specified cyclical window from among the plurality of time-series segments associated with said fault type; and
repeating the alignment and combination steps with different reference segments and different subsets of time-series segments, in order to create multiple diverse synthetic segments that expand the fault-specific augmented dataset.

12. The computer-implemented method of any one of the preceding claims, wherein the augmented data generation further comprises constraining a maximum allowable time-warping displacement in the dynamic time warping alignment.

13. The computer-implemented method of any one of the preceding claims, further comprising modifying the steps of generating augmented data to incorporate additional perturbations of temporal dynamics, seasonal effects, and/or sensor drift patterns.

14. A system for diagnosing operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one district heating substation connected to the first side and the second side, the substation being configured to facilitate thermal energy exchange between the first side and the second side, wherein one or more downstream heating/cooling systems at the second side are coupled to the at least one substation, the system comprising:
one or more processors; and
one or more non-transitory computer-readable media storing instructions that, when executed by the one or more processors, cause the system to:
receive time-series data acquired from one or more sensors measuring operational parameters of the district heating substation;
generate augmented data from the received time-series data by performing the steps of:
identifying, for each fault type, a plurality of time-series segments associated with that fault type;
selecting at least one reference segment from the plurality of time-series segments;
aligning one or more additional segments within a chosen temporal window around the reference segment using a time-series alignment technique; and combining the aligned segments to create a synthetic segment representative of said fault type;
pre-train a fault classification model on the augmented data, wherein the fault classification model is a machine learning model configured to process time-series data;
fine-tune the fault classification model using non-augmented time-series data of the district heating substation, so as to adapt the model to actual operational distributions; and
apply the fine-tuned fault classification model to newly acquired time-series data to diagnose faults in the district heating substation and/or the one or more downstream heating/cooling systems coupled to the district heating substation.

15. A computer-implemented method of training a fault classification model for diagnosing operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one district heating substation connected to the first side and the second side, the substation being configured to facilitate thermal energy exchange between the first side and the second side, wherein one or more downstream heating/cooling systems at the second side are coupled to the at least one substation, the method comprising:
receiving time-series data acquired from one or more sensors measuring operational parameters of the district heating substation;
generating augmented data from the received time-series data, the generating comprising:
identifying, for each fault type, a plurality of time-series segments associated with that fault type,
selecting at least one reference segment from the plurality of time-series segments,
aligning one or more additional segments within a chosen temporal window around the reference segment using a time-series alignment technique, and
combining the aligned segments to create a synthetic segment representative of said fault type;
pre-training the fault classification model on the augmented data, wherein the fault classification model is a machine learning model configured to process time-series data; and
fine-tuning the fault classification model using non-augmented time-series data from the district heating substation to adapt the model to actual operational distributions, in order to train the model to diagnose faults in the district heating substation and/or the one or more downstream heating/cooling systems coupled to the district heating substation.
